(19) Europäisches Patentamt

European Patent Office

Office européen des brevets

(11) EP 0 585 152 B1

(12) **FASCICULE DE BREVET EUROPEEN**

(45) Date de publication et mention de la délivrance du brevet:
**17.12.1997 Bulletin 1997/51**

(51) Int. Cl.$^6$: **B01D 71/02**, C04B 38/00, C04B 35/10, C04B 35/46

(21) Numéro de dépôt: **93401914.2**

(22) Date de dépôt: **23.07.1993**

(54) **Support monolithe céramique pour membrane de filtration tangentielle**

Monolitischer, keramischer Träger für Querstromfiltermembran

Monolith ceramic support for tangential filtration membrane

(84) Etats contractants désignés:
**AT BE CH DE DK ES FR GB GR IE IT LI LU NL PT SE**

(30) Priorité: **24.07.1992 FR 9209138**

(43) Date de publication de la demande:
**02.03.1994 Bulletin 1994/09**

(73) Titulaire: **TECH-SEP**
**F-92408 Courbevoie Cédex (FR)**

(72) Inventeurs:
• **Castillon, Roger**
**F-69001 Lyon (FR)**
• **Laveniere, Jean-Paul**
**F-92000 Neuilly/sur/Seine (FR)**

(74) Mandataire:
**Seugnet, Jean Louis et al**
**RHONE-POULENC CHIMIE,**
**Direction de la Propriété Industrielle,**
**25, Quai Paul Doumer**
**92408 Courbevoie Cédex (FR)**

(56) Documents cités:
EP-A- 0 470 340        EP-A- 0 471 910
DE-A- 3 737 839        FR-A- 2 130 823
FR-A- 2 587 026

• PATENT ABSTRACTS OF JAPAN, vol. 14, no. 406 (C-754), 04 septembre 1990
• DATABASE WPI, section Ch, semaine 7937, Derwent Publications Ltd., London (GB); classe L02, AN 79-66731b

**Description**

La présente invention concerne un procédé de préparation d'un support monolithe céramique pour membrane inorganique de filtration et un support monolithe ceramique tel qu'obtenu par le procédé.

Les membranes inorganiques sont connues depuis longtemps pour leurs propriétés séparatrices et se développent rapidement par rapport aux techniques séparatives classiques dans de nombreux secteurs d'activité, tels que l'agroalimentaire, la biotechnologie, le traitement des eaux potables et industrielles, l'industrie pharmaceutique et nucléaire.

Ce transfert de technologie est apparu de façon sensible dans les domaines de l'ultrafiltration tangentielle (diamètre des pores de la membrane compris environ entre 1 et 200 nm) et de la microfiltration tangentielle (diamètre compris entre environ 0,1 et 5 µm).

Dans les techniques de filtration tangentielle, le fluide à traiter circule parallèlement à la membrane.

Les premières membranes utilisées ont été des membranes organiques remplacées de plus en plus par des membranes inorganiques.

Les membranes inorganiques formées de matériaux céramiques présentent des avantages spécifiques par rapport aux membranes organiques. En effet les membranes inorganiques du fait de leur tenue mécanique et de leur inertie chimique, biologique et thermique présentent une très longue durée de vie d'utilisation et peuvent fonctionner dans des conditions extrêmes d'utilisation (pH, température, pression, radiations...).

Deux paramètres sont particulièrement importants pour caractériser les membranes inorganiques. Il s'agit de la surface d'échange de la membrane par unité de volume permettant d'évaluer le caractère plus ou moins compact (compacité de la membrane) et du facteur de perméabilité.

Il est clair que la surface d'échange par unité de volume exprimée en m2/m3 doit être la plus élevée possible. La membrane plane, à condition d'être enroulée en spirale offre une compacité supérieure à la membrane tubulaire.

Cependant, quand le diamètre de la membrane diminue jusqu'à devenir ce qu'on appelle une fibre creuse, la compacité obtenue est alors nettement supérieure à celle des membranes planes. Toutefois s'il est très facile d'assembler à l'aide d'une résine, des fibres organiques creuses, il n'en est plus de même quand ces dernières sont minérales à cause de la grande fragilité des céramiques.

La solution à ce problème est de réaliser des membranes dont le support céramique est un monolithe, tel que par exemple celui décrit dans US 4.069.157 et EP-A 470.340. En effet dans un monolithe, il est possible de réaliser des canaux dont le diamètre peut être similaire à ceux des fibres creuses.

Une fois que l'homme du métier dans le but d'obtenir pour une membrane inorganique, une surface d'échange par unité de volume la plus élevée possible, a normalement fixé son choix sur un support monolithe, ledit monolithe doit alors présenter un facteur de perméabilité (F.P.) le plus élevé possible. F.P. répond à l'équation suivante:

$$F.P. = P.V. \times (S.V./S.A.) \qquad (1)$$

dans laquelle:

-   P.V. est la porosité du matériau,
-   S.V. est le rapport du volume du matériau excluant les perforations des canaux sur le volume total du monolithe incluant les perforations,
-   S.A. est la surface spécifique des perforations par unité de volume du monolithe.

Conformément notamment à US-A 4.060.488 précité et plus particulièrement colonne 3, lignes 43 à 57, F.P. doit être le plus élevé possible et de préférence supérieur à $10^{-4}$m.

Dans l'équation (1) ci-dessus, on voit que S.V./S.A. est directement fonction de la géométrie du monolithe. Par conséquent, pour une géométrie de monolithe donnée, la seule possibilité pour augmenter F.P. est donc d'augmenter P.V.

Cependant, les membranes inorganiques les plus performantes et les plus résistantes sont réalisées par un double frittage, d'une part du matériau céramique constitutif du support et, d'autre part, du matériau céramique constitutif de la membrane. Ces 2 frittages peuvent être réalisés séparément ou simultanément.

Plus le frittage est long et est effectué à une température élevée et plus les propriétés mécaniques de la membrane sont bonnes mais, également, plus la porosité diminue et plus le diamètre des pores augmente. On sait par ailleurs que lorsque le volume poreux d'une céramique frittée augmente, sa résistance mécanique diminue.

Le but principal visé par la présente invention est précisément de proposer un matériau céramique constitutif du support qui puisse être fritté à une température suffisamment basse pour conduire à un monolithe présentant une porosité élevée supérieure à 30 %, de préférence supérieure à 40 % (mesurée à l'aide d'un porosimètre à mercure) et dont le diamètre moyen équivalent de pore soit compris entre 1 et 20 µm, de préférence entre 5 et 15 µm.

Un autre but de la présente invention est de proposer un support monolithe du type ci-dessus, convenant plus particulièrement à la réalisation de membranes de microfiltration tangentielle et des membranes d'ultrafiltration tangentielle à faible perte de charge et à haute perméabilité à l'eau.

Un autre but de la présente invention est de proposer un procédé permettant d'étancher (de rendre étanches aux fluides à traiter) les extrémités des supports.

Ces buts et d'autres sont atteints par la présente invention qui concerne en effet un procédé de préparation d'un support monolithe céramique poreux pour membrane inorganique, présentant un diamètre moyen équivalent de pores Ds compris entre 1 et 20 $\mu$m, de préférence entre 5 et 15 $\mu$m et une porosité supérieure à 30 %, le support étant une céramique de grains d'alumine $Al_2O_3$ essentiellement de type corindon enrobés au moins en partie par des grains d'oxyde de titane $TiO_2$ essentiellement de type rutile, le pourcentage pondéral d'oxyde de titane $TiO_2$ par rapport au poids total d'$Al_2O_3$ et de $TiO_2$ étant compris entre 20 %et 50 %,

Les grains d'alumine présentant une granulométrie comprise entre entre 10 et 100 $\mu$m, de façon préférée entre 20 et 30 $\mu$m,

les grains de $TiO_2$ présentant une granulométrie comprise entre 0,1 et 1 $\mu$m, procédé selon lequel on mélange tout d'abord la poudre d'alumine avec au moins un adjuvant parmi un liant, plastifiant, lubrifiant, défloculant, agent mouillant, agent de rétention d'eau, antimousse, agent antistatique, agent chélant et bactéricide et avec éventuellement une petite partie de la poudre de $TiO_2$ par exemple inférieure à 20 % en poids et on introduit l'eau sous forme d'une barbotine contenant le reste ou la totalité de la poudre de $TiO_2$ ,cette barbotine avant mélange ayant été au préalable défloculée par un moyen connu de défloculation tel qu'un changement de pH ou l'addition d'un agent de défloculation, on malaxe, on sèche, on extrude, on calcine et on fritte à une température inférieure ou égale à 1275°C.

Selon un mode de réalisation préféré de l'invention, l'alumine est une alumine de type corindon dont les grains ont une forme tabulaire et le pourcentage pondéral d'oxyde de titane $TiO_2$ par rapport au poids total d'alumine et de $TiO_2$ est compris entre 20 et 40 %.

La teneur en eau de la pâte en vue d'aboutir à l'état plastique est généralement compris entre 15 et 25 %.Selon un procédé préféré de l'invention,

Ce procédé particulier d'introduction de l'eau et de $TiO_2$ dans la pâte, permet enrober chaque grain d'alumine par une pellicule de grains de $TiO_2$;

Comme $TiO_2$ a un point de fusion très inférieur à celui de l'alumine, cette répartition particulière de $TiO_2$ autour des grains d'alumine permet à $TiO_2$ de jouer totalement son rôle de fondant lors du taitement thermique de la pâte constitutive du support.

Cette pâte, après avoir été malaxée et éventuellement laissée vieillir quelques jours, est extrudée sous pression et les monolithes crus ainsi obtenus sont séchés à, température ambiante puis calcinés et frittés.

On élève par exemple la température de 2°C/mn jusqu'à 200°C puis de 4°C/mn jusqu'à la témpérature supérieure choisie de traitement thermique.

On a constaté qu'il se forme, à partir d'environ 1280°C par réaction entre l'alumine et l'oxyde de titane, un autre composé défini appelé tialite de formule $Al_2TiO_5$. L'apparition de tialite est la cause d'apparition de microfissures et conduit à l'obtention d'un support indésirable d'une extrême fragilité.

Par conséquent, on opère le frittage à une température maximum de 1275°C.

La présente invention vise également les membranes inorganiques de filtration, plus particulièrement les membranes de microfiltration et d'ultrafiltration à perméabilité à l'eau et à l'air élevées, préparées à partir de supports conformes à la présente invention.

La présente invention vise donc une membrane minérale de microfiltration, caractérisée en ce qu'elle est constituée par :

- un support monolithe multicanaux tel qu'obtenu par le procédé ci-dessus,
- une couche séparatrice membranaire située à la surface des canaux constituée de particules d'oxydes métalliques frittées dont le diamètre moyen équivalent Do avant frittage est compris entre 0,1 et 3 $\mu$m suivant un rapport:

$$0,3 < Ds/Do < 200, \text{ de préférence } 1 < Ds/Do < 150$$

ladite couche ne pénétrant pas de façon sensible à l'intérieur de la porosité du support et présentant un diamètre moyen équivalent de pore Dm compris entre 0,05 et 1,5 $\mu$m.

Les oxydes métalliques utilisables dans le cadre de l'invention sont de préférence les oxydes des métaux des groupes 2a, 3b, 4b, 5b, 6b, 7b, 8, 1b, 2b, 3a et 4a de la classification périodique des éléments (cf Handbook of Chemistry and Physics 53ème Edition).

Le métal de l'oxyde métallique peut être en particulier choisi parmi le béryllium, le magnésium, le calcium, l'aluminium, le titane, le strontium, l'yttrium, le lanthane, le zirconium, le hafnium, le thorium, le fer, le manganèse, le silicium et les divers mélanges possibles. Toutefois, l'oxyde préféré est l'oxyde de titane, l'alumine, la zircone qui peut comporter en outre un métal de stabilisation structurale choisi parmi l'yttrium, le calcium, le magnésium et un métal des terres rares et leurs mélanges.

La couche membranaire d'oxydes métalliques est déposée sur le support par le procédé connu dénommé engobage ("slip casting") selon lequel on dépose généralement une barbotine de l'oxyde métallique sur le support suivi d'un frittage approprié.

La couche membranaire frittée a de préférence une épaisseur comprise entre 5 et 50 μm.

Bien entendu, la température de frittage doit être compatible avec la température de frittage maximum du support.

Selon une autre caractéristique importante selon l'invention, la couche membranaire de microfiltration ne doit pas pénétrer de façon sensible à l'intérieur du support.

On peut dire, pour fixer les idées, que l'interpénétration de la couche membranaire avec le support est généralement inférieure à 2 μm, de préférence inférieure à 0,5 μm.

Il existe divers procédés connus permettant d'aboutir à ce résultat. Un des plus simples consiste, avant l'engobage, à combler la porosité du support par un liant organique se décomposant au moment du frittage comme par exemple une résine mélamine/formol.

On peut également obturer les orifices des pores du support au moyen de poudres très fines de produits éliminables par combustion dans l'air comme par exemple le noir de carbone.

Les membranes de microfiltration selon l'invention, plus particulièrement dans le cas où le support est un mélange d'alumine et d'oxyde de titane et où la membrane est en $TiO_2$, sont particulièrement robustes, présentent une perte de charge faible et une perméabilité à l'eau particulièrement élevée qui peut dépasser 3000 l/h/m2/bar pour une membrane dont le diamètre de pore moyen est de 0,2 μm et pour un support ayant une porosité de 45 % pour un diamètre de pore moyen de 6 μm.

La présente invention vise également une membrane d'ultrafiltration préparée à partir d'une membrane minérale de microfiltration selon l'invention et présentant une perméabilité à l'eau et à l'air élevées.

La présente invention vise donc une membrane d'ultrafiltration, caractérisée en ce qu'elle est constituée par :

- une membrane minérale de microfiltration selon l'invention,
- une couche séparatrice membranaire d'ultrafiltration constituée de particules d'oxydes métalliques frittées dont le diamètre équivalent avant frittage Du est compris entre 2 et 100 nm et suivant un rapport :

$$0,5 < Dm/Du < 750$$

ladite couche membranaire d'ultrafiltration étant située sur la couche membranaire de microfiltration et ne pénétrant pas de façon sensible à l'intérieur de cette dernière.

Les particules d'oxydes métalliques frittés sont obtenues:

soit avec un oxyde et un procédé pour déposer la couche analogues à ceux utilisés pour la couche de microfiltration. Seule la granulométrie change.
soit par traitement thermique de particules d'oxydes hydratés obtenues par un procédé de type sol-gel et déposées par la méthode d'engobage.

La membrane d'ultrafiltration selon l'invention est particulièrement robuste et présente une perte de charge faible et une perméabilité à l'eau élevée pouvant dépasser 500 l/h/m2/bar pour une membrane dont le diamètre de pore est de l'ordre de 20 nm, celui de la membrane intermédiaire de microfiltration de 0,2 μm et celui du support de 5 μm pour une porosité de 45 %.

Les membranes selon l'invention à haute perméabilité à l'eau et à faible perte de charge sont plus particulièrement performantes pour la filtration de liquide peu colmatant.

C'est ainsi que les membranes de microfiltration selon l'invention sont particulièrement adaptées à l'obtention d'eau ultrapure pour l'électronique, à la potabilisation des eaux à partir notamment d'eaux souterraines, à la filtration stérile et à la clarifications du vin, du cidre, du vinaigre et des jus de fruits et à la production de fluides stériles à usage médical (hôpitaux), à l'obtention d'eau de table en bouteilles (élimination du fer et des bactéries, etc...).

Les membranes d'ultrafiltration sont particulièrement adaptées à l'obtention d'eau stérile (débarrassée des bactéries) et apyrogène pour l'industrie chimique et pharmaceutique, à la récupération des protéines dans les effluents agroalimentaires, au traitement des effluents des industries papetières et sucrières, à l'abaissement de la demande chimique en oxygène des eaux usées, à la concentration du lait et de ses dérivés, etc...

La présente invention vise également un support monolithe et les membranes de filtration comportant un tel support dont les extrémités sont étanchées, c'est-à dire rendues étanches aux liquides à traiter. Les extrémités à étancher sont situées aux deux extrémités du support à la jonction entre la couche membranaire et la partie du support qui rencontre le liquide à traiter qui traverse la membrane. Les parties à étancher sont donc en fait toute la surface des 2 extrémités du support qui ne présente pas de couche membranaire.

Conformément à l'invention les extrémités des supports ou des membranes sont étanchées par une pellicule mince d'un polymère thermoplastique ou thermofusible.

Parmi les polymères thermoplastiques, les polymères préférés sont les polyoléfines halogénées ou perhalogénées éventuellement greffées en particulier les polyoléfines fluorées et perfluorées éventuellement greffées tel que les F E P,T F E, P F A, E C T F E ,E T F E et en particulier le Téflon$^{®}$.

La pellicule de polymère est déposée par tout procédé connu convenable tel que par enduction d'une suspension de polymère, par un procédé électrostatique, ou par dépôt direct au moyen d'un lit fluidisé de poudre de polymèresuivi d'un traitement thermique.

La couche de polymère présente avantageusement une épaisseur comprise entre 10 et 500 µm de préférence entre 100 et 200 µm.

De façon inattendue, on a constaté selon l'invention que les polymères thermoplastiques ou thermofusibles adhèrent parfaitement à la surface du support et masquent toute la porosité. En outre dans le cas de l'utilisation d'une polyoléfine fluorée, la couche de polymère ne réduit pratiquement pas la stabilité thermique et chimique du support.

L'exemple suivant illustre l'invention sans en limiter la portée. Dans tout ce qui suit ou ce qui précède, les % et parties sont en poids sauf indications contraires.

**EXEMPLE :**

a) Préparation de la pâte céramique et du monolithe à l'état cru :

Dans un mélangeur Lädige M20$^{®}$ on mélange pendant 10 minutes:

- 48% en poids de corindon de granulométrie moyenne de 25 µm,
- 3,4% d'un liant à base de dérivé d'amidon.
- 3,4% d'un liant plastifiant qui est un liant cellulosique comportant des groupes méthyle et hydroxypropyle sur la chaîne.
- 0,2% d'un agent de pressage qui est en émulsion aqueuse avec un tensio-actif non ionique.

On ajoute alors une barbotine défloculée de rutile constituée de :

- 20,5% de rutile de granulométrie 0,2 µm et,
- 24,5% d'eau,

La pâte ainsi obtenue est transférée sur un malaxeur HOBART$^{®}$ A 200 pour un malaxage pendant 4 heures.

La pâte obtenue est alors laissée pour vieillir 4 jours puis est extrudée sous une pression de 15 bars en monolithe de géométrie tubulaire de diamètre 20 mm traversés de 7 canaux cylindriques de diamètre 4 mm dont l'un est au centre et les 6 autres à la périphérie. Le monolithe a une longueur de 95 cm. Les monolithes sont séchés pendant 3 jours sur des rouleaux en rotation permettant une élimination régulière de l'eau.

b) Calcination des monolithes crus :

Les monolithes crus sont introduits dans un four électrique où ils subissent une première élévation de température jusqu'à 200°C à une vitesse de 2°C/mn avec maintien à 200°C pendant 1 h puis passage de 200°C à 1275°C à une vitesse de 4°C/mn avec maintien à cette température pendant 15 h.

Les monolithes ainsi obtenus présentent les caractéristiques suivantes:

- résistance à l'éclatement: 60 bars
- porosité: 43 %,
- diamètre moyen des pores : 6 µm et 90 % du volume poreux est compris entre 2 et 15 µm.

Un monolithe immergé 150 heures dans un bain de soude (0,5N) à 80°C, ne subit aucune perte de poids et n'est pas attaqué chimiquement.

c) Dépôt d'une couche membranaire de microfiltration :

On enduit tout d'abord par remplissage puis vidange l'intérieur du monolithe au moyen d'une résine mélamine/formol qui va maintenir la couche membranaire en surface après disparition lors du frittage.

On prépare ensuite une barbotine de TiO$_2$ ayant la composition pondérale suivante:

- TiO$_2$ : 6 %,

- Liant organique : 20 %,
- $H_2O$: 74 %.

$TiO_2$ est du rutile commercialisé par la Société Titafrance sous la dénomination commerciale REX[®].
Le diamètre moyen des particules est de 0,4 $\mu$m.
Le liant est du Carbopol[®] 934.
La barbotine est préparée de la façon suivante:

- on met en suspension sous agitation mécanique $TiO_2$ dans l'eau contenant le dispersant,
- on homogénéise et on tamise la suspension,
- on ajoute le liant organique,
- on tamise de nouveau et on enduit les canaux du support par la technique de l'engobage. On sèche le revêtement pendant 3 heures à 80°C et on fritte le dépot dans un four électrique.

On chauffe tout d'abord le support et le dépôt jusqu'à 250°C pendant 1 h en ayant atteint cette température à la vitesse de 2°C/mn puis on fritte le dépot à 1025°C pendant 3 heures, cette température ayant été atteinte à la vitesse de 5°C/mn.

On obtient une membrane de 25 $\mu$m d'épaisseur qui ne pénètre pas sensiblement à l'intérieur du support dont le diamètre équivalent de pores est de 0,2 $\mu$m et qui présente une perméabilité à l'eau de 3400 l/h/m2/bar.

d) Dépôt d'une couche membranaire d'ultrafiltration :

On effectue exactement les mêmes opérations qu'en c) ci-dessus sauf que la poudre de $TiO_2$ a une granulométrie de 50 nm. On obtient après frittage une membrane d'ultrafiltration de 2 $\mu$m d'épaisseur qui ne pénètre pas sensiblement à l'intérieur de la couche de microfiltration et dont le diamètre moyen équivalent de pores est de 20 nm et qui présente une perméabilité à l'eau de 550 l/h/m2/bar.

**Revendications**

1. Procédé de préparation d'un support monolithe céramique poreux pour membrane inorganique, présentant un diamètre moyen équivalent de pores Ds compris entre 1 et 20 $\mu$m et une porosité supérieure à 30 %, le support étant une céramique de grains d'alumine essentiellement de type corindon enrobés au moins en partie par des grains de $TiO_2$ essentiellement de type rutile, la granulométrie de l'alumine étant comprise entre 10 et 100 $\mu$m, la granulométrie de $TiO_2$ étant comprise entre 0,1 et 1 $\mu$m et le poucentage pondéral de $TiO_2$ par rapport au poids total d'$Al_2O_3$ et de $TiO_2$ étant compris entre 20 et 50 %, procédé dans lequel on mélange les grains d'alumine avec au moins un adjuvant choisi parmi un liant, un plastifiant, un lubrifiant, un défloculant, un agent mouillant, un agent de rétention d'eau, un antimousse, un agent antistatique, un agent chélatant et un bactéricide avec éventuellement une petite partie de $TiO_2$, on introduit le reste ou la totalité de $TiO_2$ et l'eau sous forme d'une barbotine préalablement défloculée, on malaxe la pâte ainsi obtenue, on la sèche, on l'extrude, on la calcine et on la fritte à une température inférieure ou égale à 1275°C.

2. Support monolithe céramique caractérisé en ce qu'il est susceptible d'être obtenu par le procédé selon la revendication 1.

3. Membrane minérale de microfiltration, caractérisée en ce qu'elle est constituée par :

   - un support monolithe céramique selon la revendication 2,
   - une couche séparatrice membranaire située à la surface des canaux, constitués de particules d'oxydes métalliques frittées dont le diamètre moyen équivalent avant frittage Do est compris entre 0,1 et 3 $\mu$m suivant un rapport :

$$0,3 < Ds/Do < 200,$$

   ladite couche membranaire ne pénétrant pas de façon sensible à l'intérieur de la porosité du support et présentant un diamètre moyen équivalent de pore Dm compris entre 0,05 et 1,5 $\mu$m.

4. Membrane minérale d'ultrafiltration, caractérisée en ce qu'elle est constituée par :

   - une membrane de microfiltration selon la revendication 3,

- une couche séparatrice membranaire d'ultrafiltration constituée de particules d'oxydes métalliques frittées dont le diamètre équivalent avant frittage Du est compris entre 2 et 100 nm et suivant un rapport :

$$0,5 < Dm/Du < 750,$$

ladite couche membranaire d'ultrafiltration étant située sur la couche membranaire de microfiltration et ne pénétrant pas de façon sensible à l'intérieur de cette dernière.

5. Support ou membrane selon l'une des revendications 2 à 4, caractérisé en ce que les extrémités du support ou de la membrane sont étanchées par une pellicule mince d'un polymère thermoplastique ou thermofusible.

6. Support ou membrane selon la revendication 5, caractérisé en ce que le polymère est choisi parmi les polyoléfines fluorées et perfluorées éventuellement greffées.

**Claims**

1. A process for the preparation of a porous monolithic ceramic support for an inorganic membrane, having an average equivalent pore diameter $D_s$ which is in the range 1 $\mu$m to 20 $\mu$m and a porosity of more than 30%, the support being a ceramic with essentially corundum type alumina grains at least partially coated with essentially rutile type $TiO_2$ grains, the alumina grain size being in the range 10 $\mu$m to 100 $\mu$m, the $TiO_2$ grain size being in the range 0.1 $\mu$m to 1 $\mu$m and the percentage of $TiO_2$ with respect to the total weight of $Al_2O_3$ and $TiO_2$ being in the range 20% to 50% by weight, in which process the alumina grains are mixed with at least one additive selected from a binder, a plasticizer, a lubricant, a defloculant, a wetting agent, a water retaining agent, an antifoam agent, an antistatic agent, a chelating agent and a bactericide, and optionally with a small portion of the $TiO_2$, the remainder or the totality of the $TiO_2$ and the water being introduced in the form of a slip which has been deflocculated, and the paste obtained is dried, extruded, calcined and sintered at a temperature which is less than or equal to 1275°C.

2. A monolithic ceramic support, characterized in that it is obtainable by the process of claim 1.

3. An inorganic microfiltration membrane, characterized in that it is constituted by:

   - a monolithic ceramic support in accordance with claim 2;
   - a separating membrane layer located on the surface of channels, constituted by particles of sintered metal oxides with an average equivalent diameter before sintering $D_o$ which is in the range 0.1 $\mu$m to 3 $\mu$m which satisfies the ratio:

$$0.3 < D_s/D_o < 200$$

   said membrane layer substantially not penetrating into the interior of the porosity of the support and having an average equivalent pore diameter $D_m$ which is in the range 0.05 $\mu$m to 1.5 $\mu$m.

4. An inorganic microfiltration membrane, characterized in that it is constituted by:

   - a microfiltration membrane in accordance with claim 3;
   - an ultrafiltration separating membrane layer constituted by particles of sintered metal oxides with an average equivalent diameter before sintering $D_u$ which is in the range 2 nm to 100 nm which satisfies the ratio:

$$0.5 < D_m/D_u < 750,$$

   said ultrafiltration membrane layer being located on the microfiltration membrane layer and substantially not penetrating into the interior of the latter.

5. A support or membrane according to any one of claims 2 to 4, characterized in that the extremities of the support or membrane are sealed by a thin film of a thermoplastic or thermofusible polymer.

6. A support or membrane according to claim 5, characterized in that the polymer is selected from fluorinated and perfluorinated polyolefins which are optionally grafted.

**Patentansprüche**

1. Verfahren zur Herstellung eines monolithischen porösen keramischen Trägers für anorganische Membranen, der einen mittleren äquivalenten Porendurchmesser Ds zwischen 1 und 20 µm und eine Porosität über 30% aufweist, wobei der Träger eine Keramik aus Körnchen aus Aluminiumoxid im wesentlichen vom Korundtyp, die mindestens zum Teil von Körnchen aus $TiO_2$ im wesentlichen vom Rutiltyp umhüllt sind, ist und wobei die Kornklassierung des Aluminiumoxids zwischen 10 und 100 µm liegt und die Kornklassierung von $TiO_2$ zwischen 0,1 und 1 µm liegt und der Gewichtsprozentsatz von $TiO_2$ bezogen auf das Gesamtgewicht von $Al_2O_3$ und $TiO_2$ zwischen 20 und 50% beträgt, wobei man in diesem Verfahren die Aluminiumoxidkörnchen mit mindestens einem Hilfsstoff, ausgewählt aus einem Bindemittel, einem Weichmacher, einem Gleitmittel, einem Flockenzerstörer, einem Netzmittel, einem Wasserrückhaltemittel, einem Entschäumer, einem antistatischen Mittel, einem Komplexbildner und einem Bakterizid, mit gegebenenfalls einem kleinen Teil des $TiO_2$ mischt, man den Rest oder die Gesamtmenge des $TiO_2$ und Wasser in Form eines vorzugsweise entflockten Breis zugibt, man die so erhaltene Paste durch Kneten mischt, diese trocknet, extrudiert, kalziniert und bei einer Temperatur unter oder gleich 1275°C sintert.

2. Monolithischer keramischer Träger,
dadurch gekennzeichnet, daß er durch das Verfahren nach Anspruch 1 erhalten werden kann.

3. Mineralische Mikrofiltrationsmembran,
dadurch gekennzeichnet, daß sie gebildet wird durch:

   - einen monolithischen keramischen Träger nach Anspruch 2,
   - eine membranartige Trennschicht, die sich auf der Oberfläche der Kanäle befindet und die gebildet wird durch gesinterte Teilchen von Metalloxiden, deren mittlerer äquivalenter Durchmesser vor der Sinterung Do zwischen 0,1 und 3 µm liegt gemäß einem Verhältnis:

$$0,3 < Ds/Do < 200,$$

   wobei die membranartige Schicht nicht merklich in die Poren des Trägers eindringt und einen mittleren äquivalenten Porendurchmesser Dm zwischen 0,05 und 1,5 µm aufweist.

4. Mineralische Ultrafiltrationsmembran,
dadurch gekennzeichnet, daß sie gebildet wird durch:

   - eine Mikrofiltrationsmembran nach Anspruch 3,
   - eine membranartige Ultrafiltrationstrennschicht, die durch gesinterte Teilchen von Metalloxiden gebildet wird, deren äquivalenter Durchmesser vor der Sinterung Du zwischen 2 und 100 nm liegt und einem Verhältnis:

$$0,5 < Dm/Du < 750$$

   entspricht, wobei die membranartige Ultrafiltrationsschicht sich auf der membranartigen Mikrofiltrationsschicht befindet und nicht merklich in das Innere dieser letzteren eindringt.

5. Träger oder Membran nach einem der Ansprüche 2 bis 4,
dadurch gekennzeichnet, daß die Enden des Trägers oder der Membran durch einen dünnen Überzug aus einem thermoplastischen oder in der Wärme schmelzfähigen Polymer abgedichtet sind.

6. Träger oder Membran nach Anspruch 5,
dadurch gekennzeichnet, daß das Polymer aus den fluorierten und perfluorierten, gegebenenfalls gepfropften Polyolefinen ausgewählt ist.